# EUROPÄISCHE PATENTSCHRIFT

(11) **EP 2 530 061 B1**
(45) Veröffentlichungstag und Bekanntmachung des Hinweises auf die Patenterteilung: **17.12.2014**
(21) Anmeldenummer: 11004525.9
(22) Anmeldetag: 03.06.2011
(51) Int. Cl.: C04B 35/486, C04B 35/632, F02D 41/14, G01N 27/407

(54) **Keramische Grünfolie**
Ceramic green sheet
Feuille de céramique crue

(43) Veröffentlichungstag der Anmeldung: 05.12.2012
(73) Patentinhaber: KERAFOL Keramische Folien GmbH, D-92676 Eschenbach (DE)
(72) Erfinder: Betz, Thomas, 92637 Weiden (DE); Seuss, Armin, 92670 Windischeschenbach (DE); Dr. Krahn, Wolfgang, 95615 Marktredwitz (DE)
(74) Vertreter: Hafner, Dieter

(56) Entgegenhaltungen:
- WO-A2-2009/038674
- JP-A- 2008 222 535
- US-A- 4 396 480
- US-A- 5 248 463
- US-A1- 2006 226 569
- Mistler, R. E., Bianchi, E., Wade, B. and Hurlbut, J.: "Evaluation of an Environmentally Friendly Plasticizer for Polyvinyl Butyral for Use in Tape Casting", Advanced Processing and Manufacturing Technologies for Structural and Multifunctional Materials: Ceramic Engineeing and Science Proceedings, Bd. 28, Nr. 7 14. Dezember 2009 (2009-12-14), Seiten 27-34, XP000002656418, John Wiley & Sons, Inc., Hoboken, NJ, USA DOI: 10.1002/9780470339718.ch4 Gefunden im Internet: URL:http://onlinelibrary.wiley.com/doi/10. 1002/9780470339718.ch4/references [gefunden am 2011-08-05]

## Beschreibung

Die Erfindung betrifft eine keramische Grünfolie mit den Merkmalen des Oberbegriffes des Anspruches 1.

Bekannte Grünfolien bestehen in der Regel aus einem Feststoffanteil, der organisches Material und anorganisches Material umfasst. Der organische Anteil unter den Feststoffen kann z. B. Aluminiumoxid, Yttrium- oder Scandium-stabilisiertes Zirkonoxid oder auch andere keramische, metallische oder glasige Werkstoffe sein, zusätzlich umfasst der anorganische Anteil Reststoffe in entsprechender Menge. Der organische Anteil umfasst in der Rege Binder, Weichmacher und Dispergierer, wobei als Weichmacher in der Regel Phthalate, Polyole, Glykole, Phosphate sowie andere schwerflüchtige Kohlenwasserstoffe und dgl. eingesetzt werden.

Der Einsatz insbesondere von Phthalaten wird als gesundheitsschädlich angesehen, weswegen der Erfindung die Aufgabe zugrunde liegt, eine keramische Grünfolie mit den Merkmalen des Oberbegriffes des Anspruches 1 derart auszubilden, dass sie unter Beibehaltung ihrer mechanischen Stabilität und elastischen Eigenschaften phthalatffei hergestellt werden kann. Angestrebt ist sogar eine Verbesserung der mechanischen Eigenschaften hinsichtlich mechanischem Verhalten im Handling, beim Bedrucken, Stanzen oder auch der Laminierung.

Aus der WO2009/038674A1 geht ein Verfahren zur Herstellung keramischer Grünfolien für YAG-Laser hervor, bei der als Weichmacher Phathalte, Adipate und Sebazate sowie Mischungen hiervon verwendet werden.

Aus der US2006/0226569 geht ein Verfahren zur Herstellung keramicher Grünfolien hervor, bei der ein Weichmacher aus phtalatfreien Weichmacher und besonders aus Ester der Zitronen- oder Adipinsäure verwendet wird.

Diese Aufgabe wird dadurch gelöst, dass der Weichmacher ein Mehrkomponenteninsbesondere ein Zweikomponenten-Weichmachersystem umfaßt, das als erste Komponente ein Di-n-butyladipat sowie als zweite Komponente in Form einer Beimengung Weichmacher aus der Gruppe der Adipate und/oder Sebazate und/oder Carbonsäureester umfasst.

Diese Kombination von Stoffen hat sich als stabilisierend für die mechanischen Eigenschaften der Grünfolien erwiesen, die Weiterverarbeitung der Grünfolien insbesondere im Bereich eines mechanischen Zuschnittes, der Bedruckung mit Siebdruckpasten, dem Stanzen der Grünfolie, der Laminierung und der Sinterung ist mit der Merkmalskombination des Anspruches 1 verbessert bzw. mindestens in vergleichbarer Weise gewährleistet.

Vorteilhafte Weiterbildungen der Erfindung ergeben sich aus den Unteransprüchen.

Die Grünfolien mit den Merkmalen der Ansprüche 1 - 11 eignen sich besonders vorteilhaft im gesinterten Zustand als Sensoren in der Abgastechnologie von Kraftfahrzeugmotoren oder der Herstellung von Hochtemperaturbrennstoffzellen. Die Merkmale des Anspruches 7 hinsichtlich der Porosität, des Anspruches 8 hinsichtlich der Gründichte wirken sich insbesondere dann vorteilhaft aus, wenn die Grünfolie einem Druckvorgang unterzogen wird. Anspruch 9 hinsichtlich der Sinterschwindung ist deshalb vorteilhaft, weil dadurch für Zirkonoxidfolien sehr niedrige Schwindungswerte erreicht werden, was sich vorteilhaft auf die Prozeßführung und Produktqualität auswirkt.

Die Erfindung ist anhand eines Ausführungsbeispieles näher erläutert, dass die Prozessierung einer keramischen Folie bis zu einem Keramiksubstrat zeigt.

Zunächst werden Lösemittel, Pulver und Dispergierer einem Mischprozess unterzogen, sodann kommen Binder und Plastifizierer hinzu. Die so entstehende Masse wird homogenisiert und nachfolgend durch Vakuumtechnologie von Gasblasen befreit (=entlüftet). Dieses entlüftete Material wird einem üblichen Foliengießprozess mit dem "Doctor Blade Verfahren" zugeführt. Die dann entstehende Grünfolie wird danach auf das gewünschte Format geschnitten und dadurch vereinzelt.

Die Einzelteile können entweder in dieser Form gesintert werden oder zuvor auch noch mit Bedruckungsschritten beschichtet, durch Lamination in Mehrlagenschaltungen zusammengefügt und danach erst gesintet werden.

Die Einzelteile werden während der Herstellung und der Weiterverarbeitung auch Qualitätskontrollen unterzogen und nachfolgend als Sensoren oder Hochtemperaturbrennstoffzellen eingesetzt.

Die vorteilhafter Weise eingesetzten Komponenten des Weichmacher-Mehrkomponentensystems sind:
z. B.
Komponente 1) Di-n-butyladipat (DBA - CAS-Nr. 105-99-7),
Komponente 2) 1,2-cyclohexandicarbonsäurediisononylester (DINCH- CAS-Nr. 166412-78-8)
Komponente 3) Di-oktyladipat/Di-2-Ethylhexylaladipat (DOA - CAS-Nr. 103-23-1)
Komponente 4) Di-isononyladipat (DINA/DNA - CAS-Nr. 337-03-081)
Komponente 5) Dibutyl-1,8-oktan-dicarboxylat (DBS - CAS-Nr. 109-43-3)

Beispielsweise wurden die vorstehend aufgeführten Komponenten in folgendem Verhältnis gemischt, um die Weichmacherfunktion zu gewährleisten oder zu verbessern: (alle %-Angaben in Gewichts-% der Grünfolie)

| | | |
|---|---|---|
| Beispiel 1: | Komponente 1: | 2% |
| | Komponente 3 | 1,5% |
| | | |
| Beispiel 2: | Komponente 1: | 1,5% |
| | Komponente 4: | 2% |
| | Komponente 5: | 1 % |
| | | |
| Beispiel 3: | Komponente 1: | 2% |
| | Komponente 2: | 1,5 % |

Es sei kurz erwähnt, dass die Anwendung der beschriebenen Grünfolie nicht auf die Abgastechnologie in Kraftfahrzeugen beschränkt ist. Als weitere Einsatzmöglichkeiten sind insbesondere auch Setterplatten, elektrochemische Sensoren, keramische Leiterplatten, Verschleißbauteile, Hochtemperaturbrennstoffzellen, Hochtemperaturelektrolysezellen, und weitere flächige keramische Bauteile denkbar.

Als anorganischer Anteil der Grünfolie kommen auch metallische und nichtmetallische anorganische Stoffe wie z.B. Aluminiumoxid, Aluminiumnitrid, Siliciumnitrid, Siliziumcarbid, Gläser, Glaskeramiken, Titanoxid, Bariumtitanat, Bleizirkonat, Zirkonsilikat, Porzellan, Ferrite, Metalle entweder alternativ oder in Kombination untereinander (z.B. Mischoxide und Cermets) in Frage, wobei sich dann allerdings andere Werte hinsichtlich der Porosität, Gründichte und Sinterschwindung ergeben können..

## Patentansprüche

1. Keramische Grünfolie mit folgenden Merkmalen:
- die Grünfolie umfasst einen Feststoffanteil aus anorganischem Material und organischem Material;
- der Feststoffanteil des anorganischen Materials liegt zwischen 85 Gewichts-% und 93 Gewichts-%, der Feststoffanteil des organischen Materials liegt zwischen 15 Gewichts-% und 7 Gewichts-%, wobei sich die beiden Anteile auf 100 % ergänzen;
- der Anteil aus anorganischem Material umfasst Binder, Weichmacher und Dispergierer;
**gekennzeichnet durch folgende Merkmale**:
- der Weichmacher besteht aus einem Zweikomponentensystem, das
- als erste Komponente Di-n-butyladipat (DBA) sowie als zweite Komponente eine Beimengung aus der Gruppe der Adipate und/oder Sebazate und/oder Carbonsäureester umfasst.

2. Keramische Grünfolie nach Anspruch 1,
**dadurch gekennzeichnet, dass**
der Feststoffanteil aus anorganischem Material Yttrium- und/oder Scandium-stabilisiertes Zirkonoxid umfasst.

3. Keramische Grünfolie nach Anspruch 2,
**dadurch gekennzeichnet, dass**
der Feststoffanteil aus organischem Material mehr als 95 Gewichts-% Yttrium- und/ oder Scandium-stabilisiertes Zirkonoxid und weniger als 5 Gewichts-% Restoxide aufweist.

4. Keramische Grünfolie nach Anspruch 3,
**dadurch gekennzeichnet, dass**
die Adipate Di-octyladipat/Di-2-Ethylhexyladipat (DOA) und/oder Di-isononyladipat (DINA/DNA) sind.

5. Keramische Grünfolie nach Anspruch 3 oder 4,
**dadurch gekennzeichnet, dass**
das Sebazat Dibutyl-1,8-octan-dicarboxylat (DBS) ist.

6. Keramische Grünfolie nach einem der vorhergehenden Ansprüche,
**dadurch gekennzeichnet, dass**
die Substanz Carbonsäureester in Form von 1,2-cyclohexandicarbonsäurediisononylester (DINCH) verwendet wird.

7. Keramische Grünfolie nach einem der vorhergehenden Ansprüche,
**dadurch gekennzeichnet, dass**
die Grünfolie eine Porosität von 2 - 7,5 % aufweist.

8. Keramische Grünfolie nach einem der vorhergehenden Ansprüche,
**dadurch gekennzeichnet, dass**
die Gründichte 3,4 - 3,6g/cm³ beträgt.

9. Keramische Grünfolie nach einem der vorhergehenden Ansprüche,
**dadurch gekennzeichnet, dass**
die Grünfolie nach Einfluss einer Sintertemperatur von bis zu 1500°C eine Sinterschwindung von 17,5 - 21 % aufweist.

10. Keramische Grünfolie nach einem der vorhergehenden Ansprüche,
**dadurch gekennzeichnet, dass**
die Dicke der Grünfolie zwischen 50 und 800 µm beträgt.

11. Keramische Grünfolie nach einem der vorhergehenden Ansprüche,
**dadurch gekennzeichnet, dass**
die Sinterdichte nach Anwendung einer Sintertemperatur von bis zu 1500°C 5,75 - 6,05g/cm³ beträgt.

12. Verwendung einer Grünfolie nach einem der Ansprüche 1 - 9 als Zwischenprodukt zur Herstellung eines Sensors in der Abgasanlage eines Kraftfahrzeugs oder äls Zwischenprodukt zur Herstellung einer Hochtemperaturbrennstoffzelle.

## Claims

1. Green ceramic sheet having the following features:
- the green sheet comprises a proportion of solids composed of inorganic material and organic material;
- the proportion of solids composed of the inorganic material is in the range from 85% by weight to 93% by weight, and the proportion of solids composed of the organic material is in the range from 15% by weight to 7% by weight, where the two proportions add up to 100%;
- the inorganic material comprises binder, plasticizer and dispersant;
**characterized by** the hollowing features:
- the plasticizer consists of a two-component system which
- comprises di-n-butyl adipate (DBA) as first component and a mixture from the group consisting of adipates and/or sebacates and/or carboxylic esters as second component.

2. Green ceramic sheet according to Claim 1,
**characterized in that**
the proportion of solids composed of inorganic material comprises yttrium- and/or scandium-stabilized zirconium oxide.

3. Green ceramic sheet according to Claim 2,
**characterized in that**
the proportion of solids composed of organic material comprises more than 95% by weight of yttrium- and/or scandium-stabilized zirconium oxide and less than 5% by weight of other oxides.

4. Green ceramic sheet according to Claim 3,
**characterized in that**
the adipates are dioctyl adipate/di-2-ethylhexyl adipate (DOA) and/or diisononyl adipate (DINA/DNA).

5. Green ceramic sheet according to Claim 3 or 4,
**characterized in that**
the sebacate is dibutyl 1,8-octane dicarboxylate (DBS).

6. Green ceramic sheet according to any of the preceding claims,
**characterized in that**
the substance carboxylic ester is used in the form of diisononyl 1,2-cyclohexanedicarboxylate (DINCH).

7. Green ceramic sheet according to any of the preceding claims,
**characterized in that** the green sheet has a porosity of 2 - 7.5%.

8. Green ceramic sheet according to any of the preceding claims,
**characterized in that** the green density is 3.4 - 3.6 g/cm³.

9. Green ceramic sheet according to any of the preceding claims,
**characterized in that**
the green sheet has, after exposure to a sintering temperature of up to 1500°C, a sintering shrinkage of 17.5 - 21%.

10. Green ceramic sheet according to any of the preceding claims,
**characterized in that**
the thickness of the green sheet is in the range from 50 to 800 µm.

11. Green ceramic sheet according to any of the preceding claims,
**characterized in that**
the sintered density after exposure to a sintering temperature of up to 1500°C is 5.75 - 6.05 g/cm³.

12. Use of a green sheet according to any of Claims 1 - 9 as intermediate for producing a sensor in the exhaust gas system of a motor vehicle or as intermediate for producing a high-temperature fuel cell.

## Revendications

1. Feuille céramique crue ayant les caractéristiques suivantes :
- la feuille crue comprend un constituant de matière solide à base de matière inorganique et de matière organique ;
- la proportion de solide de la matière inorganique est comprise entre 85% en poids et 93% en poids, la proportion de solide de la matière organique est comprise entre 15% en poids et 7% en poids, les deux proportions se complétant à 100% ;
- la fraction à base de matière inorganique comprend un liant, un plastifiant et un dispersant ;
**caractérisée par** les caractéristiques suivantes :
- le plastifiant consiste en un système bicomposant, qui
- comprend en tant que premier composant de l'adipate de di-n-butyle (DBA) ainsi qu'en tant que deuxième compostant un composé ajouté choisi dans le groupe des adipates et/ou des sébaçates et/ou des esters d'acides carboxyliques.

2. Feuille céramique crue selon la revendication 1,
**caractérisée en ce que**
le constituant de matière solide à base de matière inorganique comprend de l'oxyde de zirconium stabilisé avec de l'yttrium et/ou du scandium.

3. Feuille céramique crue selon la revendication 2,
**caractérisée en ce que**
le constituant de matière solide à base de matière organique comporte plus de 95% en poids d'oxyde de zirconium stabilisé avec de l'yttrium et/ou du scandium et moins de 5% en poids d'autres oxydes.

4. Feuille céramique crue selon la revendication 3,
**caractérisée en ce que**
les adipates sont l'adipate de dioctyle/adipate de di-2-éthylhexyle (DOA) et/ou l'adipate de diisononyle (DINA/DNA).

5. Feuille céramique crue selon la revendication 3 ou 4,
**caractérisée en ce que**
le sébaçate est le dicarboxylate de dibutyl-1,8-octane (DB).

6. Feuille céramique crue selon l'une quelconque des revendications précédentes,
**caractérisée en ce que**
la substance ester d'acide carboxylique est utilisée sous forme de 1,2-cyclohexanedicarboxylate de diisononyle (DINCH).

7. Feuille céramique crue selon l'une quelconque des revendications précédentes,
**caractérisée en ce que**
la feuille crue présente une porosité de 2 - 7,5%.

8. Feuille céramique crue selon l'une quelconque des revendications précédentes,
**caractérisée en ce que**
la densité à cru vaut 3,4 - 3,6 g/cm³.

9. Feuille céramique crue selon l'une quelconque des revendications précédentes,
**caractérisée en ce que**
la feuille crue présente après exposition à une température de frittage de jusqu'à 1500°C un retrait au frittage de 17,5 - 21%.

10. Feuille céramique crue selon l'une quelconque des revendications précédentes,
**caractérisée en ce que**
l'épaisseur de la feuille crue est comprise entre 50 et 800 µm.

11. Feuille céramique crue selon l'une quelconque des revendications précédentes,
**caractérisée en ce que**
la densité après frittage, après application d'une température de frittage de jusqu'à 1500°C, vaut 5,75 - 6,05 g/cm³.

12. Utilisation d'une feuille crue selon l'une quelconque des revendications 1 - 9, en tant que produit intermédiaire dans la fabrication d'un capteur dans le système de gaz d'échappement d'un véhicule automobile ou en tant que produit intermédiaire dans la fabrication d'une cellule à combustible à haute température.
